# EUROPEAN PATENT APPLICATION

(11) **EP 4 787 978 A1**
(43) Date of publication of application: **05.08.2026**
(21) Application number: 24884475.5
(22) Date of filing: 18.10.2024
(51) Int. Cl.: H04W 52/14, H04W 52/10

(54) **COMMUNICATION METHOD AND RELATED APPARATUS**

(30) Priority: 31.10.2023 CN 202311438717
(71) Applicant: HUAWEI TECHNOLOGIES CO., LTD., Shenzhen 518129 (CN)
(72) Inventor: FAN, Bo, Shenzhen, Guangdong 518129 (CN)
(74) Representative: Isarpatent
(86) International application number: PCT/CN2024/125942
(87) International publication number: WO 2025/092471

(57) **Abstract**

This application provides a communication method and a communication apparatus, and is applied to the field of communication technologies. In the technical solution provided in this application, a terminal device receives configuration information, where the configuration information includes a related parameter of one or more first resources, the first resource is an uplink path loss measurement resource, and each of the first resources corresponds to one first signal; the terminal device sends a first signal corresponding to the one or more first resources; and the terminal device receives first indication information, where the first indication information indicates a path loss value or a received power corresponding to at least one first resource. In this application, the terminal device may determine an uplink transmission path loss value between a network device having only an uplink communication function and the terminal device.

## Description

This application claims priority to Chinese Patent Application No. 202311438717.X, filed with the China National Intellectual Property Administration on October 31, 2023 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

In a process of communication between a base station and a terminal, the terminal needs to determine an uplink path loss on a transmission path from the terminal to the base station, to determine a transmit power at which the terminal sends a signal to the base station, so as to ensure a received power at which the signal arrives at the base station.

A common method for determining the uplink path loss of the terminal is as follows: The base station sends a path loss measurement signal; the terminal measures a received power of the path loss measurement signal, determines, based on a difference or a ratio, a downlink path loss of the path loss measurement signal on a transmission path from the base station to the terminal, and then uses the downlink path loss as the uplink path loss.

However, the foregoing method is not applicable to a scenario in which a network device is incapable of downlink sending. Therefore, how to determine an uplink path loss between the terminal and the base station in this scenario becomes an urgent technical problem to be resolved.

### SUMMARY

This application provides a communication method, a communication apparatus, and a communication system, to determine an uplink path loss between a terminal and a base station, so as to improve communication performance.

According to a first aspect, this application provides a communication method and a related apparatus. The method is applied to a terminal device. The method includes: The terminal device receives configuration information from a network device, where the configuration information includes a related parameter of one or more first resources, the first resource is an uplink path loss measurement resource, and each of the one or more first resources corresponds to one first signal; the terminal device sends a first signal corresponding to the one or more first resources; and the terminal device receives first indication information, where the first indication information indicates a path loss value or a received power corresponding to at least one of the one or more first resources.

In the method, the terminal device can learn of, based on a configuration of the network device, the first resource used as the uplink path loss measurement resource, so that the terminal device can send, based on the first resource, the first signal used for path loss measurement, and learn of, from the network device, a path loss value or a received power that is of the first signal and that is determined by the network device, to determine an uplink path loss value of the first signal, and finally determine an uplink path loss value between the terminal device and the network device.

In some implementations, the first resource is a sounding reference signal SRS resource.

In some implementations, the related parameter of the first resource includes a first parameter, and the first parameter indicates that the first resource is the uplink path loss measurement resource.

In some implementations, the first parameter is a type parameter, the type parameter indicates a type of the first resource, and when the type indicated by the first parameter is a first type, it indicates that the first resource is the uplink path loss measurement resource.

In some implementations, the configuration information is used to configure an uplink path loss measurement resource associated with an uplink signal resource, and the uplink signal resource includes at least one of the following resources: an SRS resource, a physical uplink control channel PUCCH resource, a physical uplink shared channel PUSCH resource, a demodulation reference signal DMRS resource, or a physical random access channel PRACH (physical random access channel) resource.

In some implementations, the uplink signal resource includes the SRS resource, and if an uplink path loss measurement resource associated with the SRS resource is not configured by using the configuration information, the SRS resource is the uplink path loss measurement resource.

In some implementations, before the sending the first signal corresponding to the one or more first resources, the method further includes: The terminal device determines a transmit power of the first signal.

Optionally, the transmit power of the first signal is a first transmit power configured by using the configuration information, or a transmit power determined based on the path loss corresponding to the first resource.

In some possible implementations, when a first condition is met, the transmit power of the first signal is the first transmit power; or when the first condition is not met, the transmit power of the first signal is the transmit power determined based on the path loss value corresponding to the first resource.

The first condition includes one or more of the following conditions: Initial first indication information has been received by the terminal device; the initial first indication information has taken effect; the terminal device knows the path loss value corresponding to the first resource; the terminal device has received, within a past period of time, indication information including the path loss value corresponding to the first resource; or a timer that corresponds to the first resource has not expired, where the timer is a timer used to maintain the path loss value corresponding to the first resource.

In some implementations, the first indication information includes an index of each of the at least one first resource and path loss information corresponding to the first resource.

In some implementations, for a first resource with a largest path loss value or a smallest path loss value in the at least one first resource, the first indication information includes a path loss value of the first resource; and for any other first resource in the at least one first resource, the first indication information includes a difference between a path loss value of the any other first resource and the path loss value of the first resource.

In some implementations, the first indication information includes an index of each of the at least one first resource and a received power corresponding to the first resource; and the terminal device calculates, based on the received power of the at least one first resource, the path loss value corresponding to the at least one first resource.

In some implementations, for a first resource with a largest received power or a smallest received power in the at least one first resource, the first indication information includes a received power of the first resource; and for any other first resource in the at least one first resource, the first indication information includes a difference between a received power of the any other first resource and the received power of the first resource.

According to a second aspect, this application provides a communication method. The method is applied to a network device. The method includes: sending configuration information, where the configuration information includes a related parameter of one or more first resources, the first resource is an uplink path loss measurement resource, and each of the one or more first resources corresponds to one first signal; receiving a first signal corresponding to the one or more first resources; and sending first indication information, where the first indication information indicates a path loss value or a received power corresponding to at least one first resource.

In the method, the network device can determine an uplink path loss value of the first signal, and can finally determine an uplink path loss value between a terminal device and the network device.

In some implementations, the first resource is a sounding reference signal SRS resource.

In some implementations, the related parameter of the first resource includes a first parameter, and the first parameter indicates that the first resource is the uplink path loss measurement resource.

In some implementations, the first parameter is a type parameter, the type parameter indicates a type of the first resource, and when the type indicated by the first parameter is a first type, it indicates that the first resource is the uplink path loss measurement resource.

In some implementations, the configuration information is used to configure an uplink path loss measurement resource associated with an uplink signal resource, and the uplink signal resource includes at least one of the following resources: an SRS resource, a physical uplink control channel PUCCH resource, a physical uplink shared channel PUSCH resource, a demodulation reference signal DMRS resource, or a physical random access channel PRACH resource.

In some implementations, the uplink signal resource includes the SRS resource, and if an uplink path loss measurement resource associated with the SRS resource is not configured by using the configuration information, the SRS resource is the uplink path loss measurement resource.

In some implementations, before the sending the first indication information, the method further includes: determining a transmit power of the first signal.

In some implementations, the transmit power of the first signal is a first transmit power configured by using the configuration information, or a transmit power determined based on the path loss corresponding to the first resource.

In some implementations, when a first condition is met, the transmit power of the first signal is the first transmit power; or when the first condition is not met, the transmit power of the first signal is the transmit power determined based on the path loss value corresponding to the first resource.

The first condition includes one or more of the following conditions: Initial first indication information has been received by the terminal device; the initial first indication information has taken effect; the terminal device knows the path loss value corresponding to the first resource; the terminal device has received, within a past period of time, indication information including the path loss value corresponding to the first resource; or a timer that corresponds to the first resource has not expired, where the timer is a timer used to maintain the path loss value corresponding to the first resource.

In some implementations, the first indication information includes an index of each of the at least one first resource and path loss information corresponding to the first resource.

In some implementations, for a first resource with a largest path loss value or a smallest path loss value in the at least one first resource, the first indication information includes a path loss value of the first resource; and for any other first resource in the at least one first resource, the first indication information includes a difference between a path loss value of the any other first resource and the path loss value of the first resource.

In some implementations, the first indication information includes an index of each of the at least one first resource and a received power corresponding to the first resource.

In some implementations, for a first resource with a largest received power or a smallest received power in the at least one first resource, the first indication information includes a received power of the first resource; and for any other first resource in the at least one first resource, the first indication information includes a difference between a received power of the any other first resource and the received power of the first resource.

According to a third aspect, this application provides a communication apparatus, including a module or a unit configured to implement the method according to any one of the first aspect and the possible implementations of the first aspect. It should be understood that each module or unit may implement a corresponding function by executing a computer program.

According to a fourth aspect, this application provides a communication apparatus, including a module or a unit configured to implement the method according to any one of the second aspect and the possible implementations of the second aspect. It should be understood that each module or unit may implement a corresponding function by executing a computer program.

According to a fifth aspect, this application provides a communication apparatus, including a processor. The processor is configured to perform the communication method according to any one of the first aspect or the possible implementations of the first aspect. The communication apparatus may be a chip or a chip system used in a terminal device.

The apparatus may further include a memory, configured to store instructions and data. The memory is coupled to the processor. When the processor executes the instructions stored in the memory, the method described according to any one of the first aspect or the possible implementations of the first aspect may be implemented. The apparatus may further include a communication interface. The communication interface is used by the apparatus to communicate with another device. For example, the communication interface may be a transceiver, a circuit, a bus, a module, or another type of communication interface.

According to a sixth aspect, this application provides a communication apparatus, including a processor. The processor is configured to perform the communication method according to any one of the second aspect or the possible implementations of to the second aspect. The communication apparatus may be a chip or a chip system used in a network device.

The apparatus may further include a memory, configured to store instructions and data. The memory is coupled to the processor. When the processor executes the instructions stored in the memory, the method described according to any one of the second aspect or the possible implementations of the second aspect may be implemented. The apparatus may further include a communication interface. The communication interface is used by the apparatus to communicate with another device. For example, the communication interface may be a transceiver, a circuit, a bus, a module, or another type of communication interface.

According to a seventh aspect, this application provides a computer-readable storage medium. The computer-readable storage medium stores program code to be executed by a communication apparatus, and the program code includes instructions used for implementing the method according to any one of the first aspect and the possible implementations of the first aspect.

According to an eighth aspect, this application provides a computer-readable storage medium. The computer-readable storage medium stores program code to be executed by a communication apparatus, and the program code includes instructions used for implementing the method according to any one of the second aspect and the possible implementations of the second aspect.

According to a ninth aspect, this application provides a computer program product including instructions. When the computer program product runs on a communication apparatus, the communication apparatus is caused to implement the method according to any one of the first aspect and the possible implementations of the first aspect.

According to a tenth aspect, this application provides a computer program product including instructions. When the computer program product runs on a communication apparatus, the communication apparatus is caused to implement the method according to any one of the second aspect and the possible implementations of the second aspect.

According to an eleventh aspect, this application provides a communication system. The communication system includes a communication apparatus configured to implement the method according to any one of the first aspect and the possible implementations of the first aspect and/or a communication apparatus configured to implement the method according to any one of the second aspect and the possible implementations of the second aspect.

### BRIEF DESCRIPTION OF DRAWINGS

FIG. 1 is a diagram of a communication system to which a method is applicable according to an embodiment of this application;
FIG. 2 is a diagram of another communication system to which a method is applicable according to an embodiment of this application;
FIG. 3 is a schematic flowchart of a communication method according to an embodiment of this application;
FIG. 4 is a schematic flowchart of a communication method according to an embodiment of this application;
FIG. 5 is a diagram of a structure of a communication apparatus according to an embodiment of this application; and
FIG. 6 is a diagram of a structure of a communication apparatus according to another embodiment of this application.

### DESCRIPTION OF EMBODIMENTS

The following describes technical solutions in embodiments of this application with reference to the accompanying drawings in embodiments of this application.

To clearly describe the technical solutions in embodiments of this application, terms such as "first" and "second" are used in embodiments of this application to distinguish between same items or similar items that have basically same functions or purposes. A person skilled in the art may understand that the terms such as "first" and "second" do not limit a quantity or an execution sequence, and the terms such as "first" and "second" do not indicate a definite difference.

It should be noted that, in embodiments of this application, the terms such as "example" or "for example" are used to represent giving an example, an illustration, or a description. Any embodiment or design scheme described as an "example" or "for example" in this application should not be explained as being more preferred or having more advantages than another embodiment or design scheme. In particular, use of the terms such as "example" or "for example" are intended to present a related concept in a specific manner.

In embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, and (or) c may indicate a, b, c, a and b, a and c, b and c, or a, b, and c, where a, b, and c may be singular or plural.

For ease of understanding of the communication method provided in embodiments of this application, the following describes a system architecture and an application scenario of the communication method provided in embodiments of this application. It may be understood that the system architecture and the application scenario described in embodiments of this application are intended to describe the technical solutions in embodiments of this application more clearly, and do not constitute a limitation on the technical solutions provided in embodiments of this application.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system such as a future mobile communication system, or a converged system of a plurality of systems. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

A device in a communication system may send a signal to another device or receive a signal from another device. The signal may include information, signaling, data, or the like. The device may alternatively be replaced with an entity, a network entity, a communication device, a communication module, a node, a communication node, or the like. In this application, the device is used as an example for description. For example, the communication system may include at least one terminal device and at least one network device. The network device may send a downlink signal to the terminal device, and/or the terminal device may send an uplink signal to the network device.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data, for example, a handheld device or a vehicle-mounted device with a wireless connection function. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a wearable device, a terminal device in a 5G network, a terminal device in a future evolved public land mobile communication network (public land mobile network, PLMN), or the like. This is not limited in embodiments of this application.

By way of example, and not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In embodiments of this application, an apparatus configured to implement a function of the terminal device may be a terminal device, or may be an apparatus that can support the terminal device in implementing the function, for example, a chip system. The apparatus may be installed in the terminal device or used in cooperation with the terminal device. In embodiments of this application, the chip system may include a chip, or may include a chip and another discrete component. In embodiments of this application, an example in which the apparatus configured to implement the function of the terminal device is the terminal device is merely used for description, and constitutes no limitation on the solutions in embodiments of this application.

The network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover the following names in a broad sense, or may be replaced with the following names, for example, a NodeB (NodeB), an evolved NodeB (evolved NodeB, eNB), a next generation NodeB (next generation NodeB, gNB), a relay station, an access point, a transmission reception point (transmission and reception point, TRP), a transmission point (transmission point, TP), a primary station, a secondary station, a multi-standard radio (multi-standard radio, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), and a positioning node. The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). A specific technology and a specific device form that are used for the network device are not limited in embodiments of this application. In some deployments, the network device mentioned in embodiments of this application may be a device including a CU or a DU or including a CU and a DU, or a device including a CU control plane node (a central unit-control plane (central unit-control plane, CU-CP)), a CU user plane node (a central unit-user plane (central unit-user plane, CU-UP)), and a DU node. For example, the network device may include a gNB-CU-CP, a gNB-CU-UP, and a gNB-DU.

In some deployments, a plurality of RAN nodes coordinate to assist the terminal in implementing radio access, and different RAN nodes separately implement a part of functions of the base station. For example, the RAN node may be a CU, a DU, a CU-CP, a CU-UP, or an RU. The CU and the DU may be separately disposed, or may be included in a same network element, for example, a BBU. The RU may be included in a radio frequency device or a radio frequency unit, for example, included in an RRU, an AAU, or an RRH.

The RAN node may support one or more categories of fronthaul interfaces, and different fronthaul interfaces respectively correspond to DUs and RUs having different functions. If a fronthaul interface between the DU and the RU is a common public radio interface (common public radio interface, CPRI), the DU is configured to implement one or more baseband functions, and the RU is configured to implement one or more radio frequency functions. If the fronthaul interface between the DU and the RU is another type of interface, compared with the CPRI, the interface performs transfer of a part of downlink and/or uplink baseband functions. For example, for downlink, one or more of precoding (precoding), digital beamforming (beamforming, BF), or inverse fast Fourier transform (inverse fast Fourier transform, IFFT) /cyclic prefix (cyclic prefix, CP) addition is moved from the DU to the RU for implementation; and for uplink, one or more of digital beamforming (beamforming, BF) or fast Fourier transform (fast Fourier transform, FFT) /cyclic prefix (cyclic prefix, CP) removal is moved from the DU to the RU for implementation. In a possible implementation, the interface may be an enhanced common public radio interface (enhanced common public radio interface, eCPRI). In an eCPRI architecture, a split manner between the DU and RU are different, corresponding to different categories (category, Cat) of eCPRIs, such as eCPRI Cats A, B, C, D, E, and F.

eCPRI Cat A is used as an example. For downlink transmission, with layer mapping as a splitting point, the DU is configured to implement the layer mapping and one or more functions before the layer mapping (that is, one or more of encoding, rate matching, scrambling, modulation, or the layer mapping), and another function after the layer mapping (for example, one or more of RE (resource element, resource granularity) mapping, digital beamforming (beamforming, BF), or inverse fast Fourier transform (inverse fast Fourier transform, IFFT) /cyclic prefix (cyclic prefix, CP) addition) is moved to the RU for implementation. For uplink transmission, with RE demapping as a splitting point, the DU is configured to implement the demapping and one or more functions before the demapping (that is, one or more of the following functions: decoding, de-rate matching, descrambling, demodulation, inverse discrete Fourier transform (inverse discrete Fourier transform, IDFT), channel equalization, or the RE demapping), and another function after the demapping (for example, one or more of digital BF or fast Fourier transform (fast Fourier transform, FFT) /CP removal) is moved to the RU for implementation. It may be understood that, for function descriptions of DUs and RUs corresponding to various categories of eCPRIs, refer to the eCPRI specification. Details are not described herein.

In a possible design, a processing unit for implementing a baseband function in the BBU is referred to as a baseband high (baseband high, BBH) unit, and a processing unit for implementing a baseband function in the RRU/AAU/RRH is referred to as a baseband low (baseband low, BBL) unit.

In different systems, the CU (or the CU-CP and the CU-UP), the DU, or the RU may have different names, but a person skilled in the art may understand meanings thereof. For example, in an ORAN (Open RAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by a software module, a hardware module, or a combination of the software module and the hardware module.

In embodiments of this application, an apparatus configured to implement a function of the network device may be a network device, or an apparatus that can support the network device in implementing the function, for example, a chip system, a hardware circuit, a software module, or a combination of the hardware circuit and the software module. The apparatus may be installed in the network device or used in cooperation with the network device. In embodiments of this application, an example in which the apparatus configured to implement the function of the network device is the network device is merely used for description, and constitutes no limitation on the solutions in embodiments of this application.

The network device and/or the terminal device may be deployed on the land, including an indoor device, an outdoor device, a handheld device, or a vehicle-mounted device; may be deployed on the water; or may be deployed on an airplane, a balloon, and a satellite in the air. A scenario in which the network device and the terminal device are located is not limited in embodiments of this application. In addition, the terminal device and the network device may be hardware devices; may be software functions running on dedicated hardware, or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

In embodiments of this application, a beam refers to a special directional sending or receiving effect formed by a transmitter or a receiver of a network device or a terminal device through an antenna array. This is similar to how a flashlight converges light in a single direction to form a light beam. Signal sending and receiving in a form of the beam can effectively increase a signal transmission distance.

In addition, the beam may be a wide beam, a narrow beam, or a beam of another type. A technology for forming the beam may be a beamforming technology or another technology. The beamforming technology may be specifically a digital beamforming technology, an analog beamforming technology, a hybrid digital/analog beamforming technology, or the like.

The beam usually corresponds to a resource. For example, during beam measurement, the network device measures different beams by using different resources, the terminal device feeds back measured resource quality, and the network device knows quality of a corresponding beam. During data transmission, beam information is also indicated by using a resource corresponding to the beam information. For example, the network device indicates a TCI-state by using a TCI field in the DCI, and the terminal device determines, based on a reference resource included in the TCI-state, to use the reference resource to determine a beam of data.

In a communication protocol, a beam may be specifically represented as a digital beam, an analog beam, a spatial domain filter (spatial domain filter), a spatial filter (spatial filter), a spatial parameter (spatial parameter), a transmission configuration indication (transmission configuration indication, TCI), a transmission configuration indication-state (TCI-state), or the like. A beam used to send a signal may be referred to as a transmission beam (transmission beam, or Tx beam), a spatial domain transmission filter (spatial domain transmission filter), a spatial transmission filter (spatial transmission filter), a spatial domain transmission parameter (spatial domain transmission parameter), a spatial transmission parameter (spatial transmission parameter), or the like. A beam used to receive a signal may be referred to as a reception beam (reception beam, or Rx beam), a spatial domain reception filter (spatial domain reception filter), a spatial reception filter (spatial reception filter), a spatial domain reception parameter (spatial domain reception parameter), a spatial reception parameter (spatial reception parameter), or the like.

In this application, a beam is uniformly used for description. However, it should be understood that the beam in this application may be replaced with another equivalent concept, and is not limited to the foregoing mentioned concept.

In embodiments of this application, a resource may be a resource for an uplink signal, and may be referred to as an uplink signal resource for short. An uplink signal includes but is not limited to a sounding reference signal (sounding reference signal, SRS) and a demodulation reference signal (demodulation reference signal, DMRS). A downlink signal includes but is not limited to a channel state information reference signal (channel state information reference signal, CSI-RS), a cell-specific reference signal (cell-specific reference signal, CS-RS), a UE-specific reference signal (user equipment-specific reference signal, US-RS), a demodulation reference signal (demodulation reference signal, DMRS), and a synchronization signal/physical broadcast channel block (synchronization signal/physical broadcast channel block, SS/PBCH block). The SS/PBCH block may be referred to as a synchronization signal block (synchronization signal block, SSB) for short.

In a communication protocol, a reference signal is configured in a form of the resource. A network device configures each reference signal for a terminal device in the form of the resource. One resource is one configuration information unit, and usually includes a parameter related to a reference signal, for example, a time-frequency resource position, a quantity of ports, and a time domain type (periodic/semi-static/aperiodic) of the reference signal.

In uplink and downlink transmission, correct beams need to be used between the network device and the terminal device to implement optimal transmission. In uplink transmission, the network device also needs to indicate, to the terminal device, an uplink transmission beam that the terminal device needs to use, because the network device knows which beam of the terminal device is an optimal beam. The uplink beam may be indicated by using a TCI-state. Specifically, a beam used for uplink transmission is indicated by using a downlink TCI-state.

In the 3GPP protocol, the network device indicates a specific TCI-state to the terminal device by using a TCI (Transmission Configuration Index, transmission configuration number) field in downlink control information (Downlink Control Information, DCI). A length of the TCI field is 3 bits, which can represent eight different field values (codepoint). Each field value of the TCI field may be associated with an index of a TCI-state, the index of the TCI-state may uniquely identify the TCI-state. The TCI-state may be a downlink TCI-state or an uplink TCI-state. Each field value of the TCI field may alternatively be associated with indexes of two TCI-states. The indexes of the two TCI-states may uniquely identify the two TCI-states. The two TCI-states may be a downlink TCI-state and an uplink TCI-state, or may be two downlink TCI-states or two uplink TCI-states.

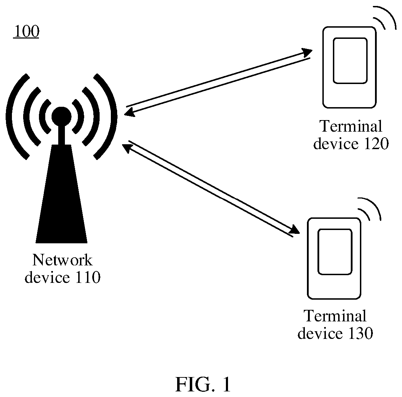

FIG. 1 is a diagram of a communication system applicable to a method according to an embodiment of this application. As shown in FIG. 1, the communication system 100 may include at least one network device, for example, a network device 110 shown in FIG. 1. The communication system 100 may further include at least one terminal device, for example, a terminal device 120 and a terminal device 130 shown in FIG. 1.

The network device 110 may communicate with the terminal device 120 and the terminal device 130 through radio links. Communication devices, for example, the network device 110, the terminal device 120, and the terminal device 130, in the communication system may communicate with each other by using a multiple-antenna technology.

In some possible scenarios, the network device 110 may have only an uplink receiving function, and does not have a downlink sending function.

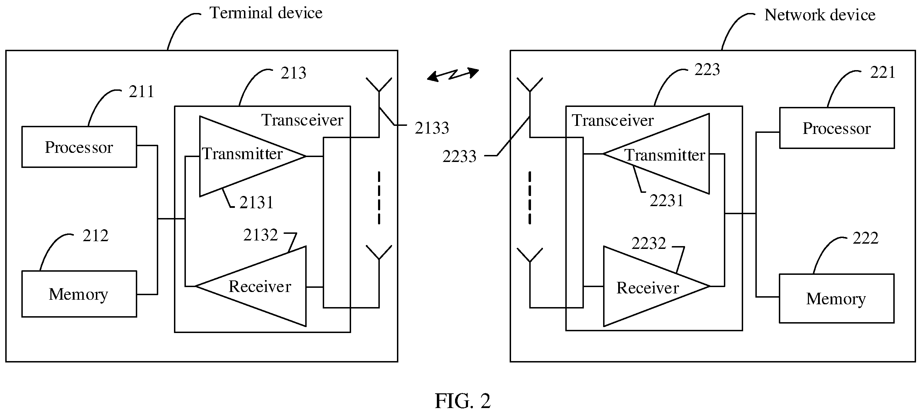

FIG. 2 is a diagram of another communication system applicable to a method according to an embodiment of this application. As shown in FIG. 2, a terminal device includes a processor 211, a memory 212, and a transceiver 213. The transceiver 213 includes a transmitter 2131, a receiver 2132, and an antenna 2133. A network device includes a processor 221, a memory 222, and a transceiver 223. The transceiver 223 includes a transmitter 2231, a receiver 2232, and an antenna 2233.

The processor 211, the memory 212, and the transceiver 213 communicate with each other through an internal connection path, and the processor 221, the memory 222, and the transceiver 223 communicate with each other through an internal connection path.

The receiver 2132 may be configured to receive transmission control information through the antenna 2133, and the transmitter 2131 may be configured to send transmission feedback information to the network device through the antenna 2133. The transmitter 2231 may be configured to send the transmission control information to the terminal device through the antenna 2233, and the receiver 2232 may be configured to receive the transmission feedback information sent by the terminal device through the antenna 2233.

In some possible scenarios, the network device in FIG. 2 may have only an uplink receiving function, and does not have a downlink sending function.

It should be noted that FIG. 1 and FIG. 2 are merely simplified diagrams used as examples for ease of understanding. In actual application, the communication system may include a plurality of network devices, or may include a plurality of terminal devices. Quantities of network devices and terminal devices included in the communication system are not limited in embodiments of this application.

The following describes an example of an application scenario of the communication method in this application. In uplink transmission from a terminal to a base station, the terminal device needs to determine, based on a path loss (pathloss for short) of uplink signal propagation, a transmit power that should be used, to ensure that signal strength at which a signal arrives at the network device meets a requirement, that is, a target received power is reached. A higher path loss indicates a higher uplink transmit power. Therefore, before performing uplink transmission, the terminal device needs to determine a value of an uplink path loss.

A specific method for determining the uplink path loss is as follows: The network device sends a path loss measurement signal to the terminal device, and the terminal device measures a received power of the path loss measurement signal, and finally calculates a downlink path loss based on a transmit power and the received power of the path loss measurement signal, and uses the downlink path loss as the uplink path loss.

A method for calculating a path loss is: dividing a transmit power (in milliwatts mW) of the path loss measurement signal by a received power of the path loss measurement signal, to obtain a value of the path loss, that is, how many times the signal is attenuated.

Another method for calculating a path loss is: subtracting a received power (in dBm) of the path loss measurement signal from a transmit power of the path loss measurement signal, to obtain a value of the path loss, that is, attenuation in dB. For example, if the transmit power of the path loss measurement signal is 40 dBm, and the received power of the path loss measurement signal is -40 dBm, the path loss value is 40 - (-40) = 80 dB.

It should be noted that a related parameter of the path loss measurement signal is configured for the terminal device in a form of a path loss measurement resource. For example, a synchronization signal and broadcast channel measurement resource block (synchronization signal and PBCH block, SS/PBCH block, SSB for short) or a channel state information-reference signal (channel state information-reference signal, CSI-RS) may be used as the path loss measurement signal.

For a network device having only an uplink receiving function, when performing uplink transmission to the network device, the terminal device also needs to determine an uplink transmit power based on a path loss value. However, because such a network device does not send a downlink signal, the path loss value cannot be measured by measuring a path loss measurement signal sent by the network device. For this problem, this application provides a new communication method.

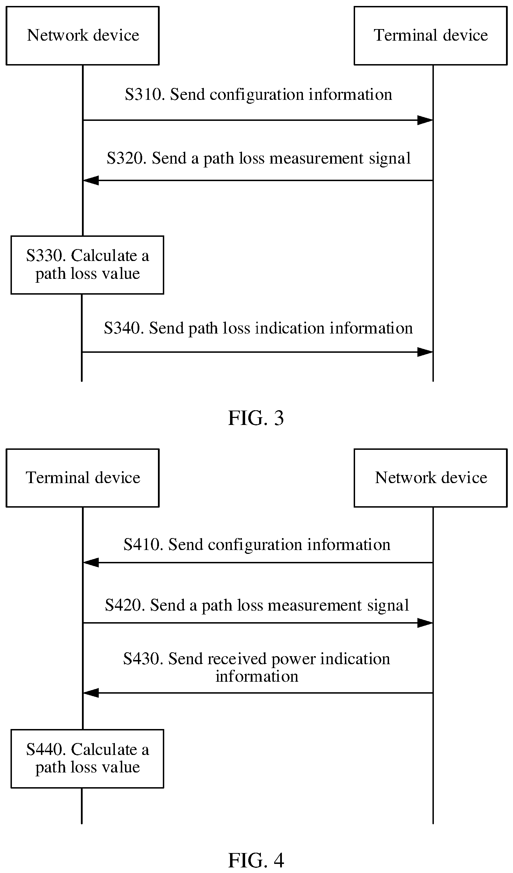

FIG. 3 is a schematic flowchart of a communication method according to an embodiment of this application. As shown in FIG. 3, the method may include S310 to S340.

S310. A network device sends configuration information to a terminal device. Correspondingly, the terminal device receives the configuration information from the network device.

For example, the configuration information is used to configure a resource, or the configuration information is used to configure an uplink resource, or the configuration information is used to configure a resource for an uplink signal.

If the resource configured by using the configuration information is used to transmit an uplink path loss measurement signal, or the resource configured by using the configuration information is used to transmit a path loss measurement signal, the configuration information may be used to configure a path loss measurement resource or used to configure an uplink path loss measurement resource, and the configured resource is the uplink path loss measurement resource. For ease of description, the uplink path loss measurement resource in embodiments of this application may be referred to as a path loss measurement resource for short, and the uplink path loss measurement signal is referred to as a path loss measurement signal for short.

For example, the configuration information may be carried in radio resource control (radio resource control, RRC) signaling, downlink control information (downlink control information, DCI) signaling, or media access control-control element (media access control-control element, MAC-CE) signaling.

For example, the configuration information may be understood as including a configuration parameter related to the path loss measurement signal. For example, the configuration information includes configuration parameters related to one or more path loss measurement resources.

For example, the path loss measurement resource is in one-to-one correspondence with the path loss measurement signal. Therefore, in some descriptions, the path loss measurement resource and the path loss measurement signal may be replaced with each other. For example, the path loss measurement resource in the description about a configuration of the path loss measurement resource may be replaced with the path loss measurement signal, and a configuration of the path loss measurement signal is described.

For example, the path loss measurement resource may be understood as a resource used to transmit the path loss measurement signal. The path loss measurement signal corresponding to the path loss measurement resource may be understood as the path loss measurement signal transmitted by using the path loss measurement resource.

For example, the path loss measurement signal may be a sounding reference signal (sounding reference signal, SRS), a demodulation reference signal (demodulation reference signal, DMRS), a phase tracking reference signal (phase tracking reference signal, PTRS), or a physical random access channel (PRACH). The DMRS may be a DMRS of a physical uplink control channel (physical uplink control channel, PUCCH), or may be a DMRS of a physical uplink shared channel (physical uplink shared channel, PUSCH).

For example, the path loss measurement resource includes at least one of the following resources: an SRS resource, a DMRS resource, a PTRS resource, a PUCCH resource, a PUSCH resource, or a PRACH resource.

The following uses an example in which the path loss measurement resource is the SRS resource to describe methods for configuring the path loss measurement resource by using the configuration information. These methods are also applicable to the foregoing other resources, and only the SRS resource needs to be replaced with the foregoing other resources. It may be understood that the path loss measurement resource in the following methods for configuring the path loss measurement resource may be replaced with the path loss measurement signal, and the SRS resource may be replaced with an SRS.

In some possible implementations, an SRS resource specially used for path loss measurement may be introduced. A parameter may indicate that the SRS resource is a resource specially used for path loss measurement. In other words, the parameter may indicate that the SRS resource is the path loss measurement resource. For ease of description, the parameter may be referred to as a first parameter.

The first parameter may be a parameter specially indicating whether the SRS resource is used for path loss measurement. Alternatively, the first parameter may be a type parameter or a usage parameter of the SRS resource. When the type parameter or the usage parameter is configured as a first type, a first usage, or a first value, it indicates that the SRS resource is an SRS resource applicable to uplink path loss measurement. It may be understood that a meaning represented by the first type, the first usage, or the first value may be agreed on in advance, and the terminal and the network device learn of the meaning in advance.

In some possible implementations, whether an SRS resource is a path loss measurement resource may be determined depending on whether a corresponding path loss measurement resource is configured for the SRS resource. If no corresponding path loss measurement resource is configured for the SRS resource, it indicates that the SRS resource is an SRS resource used for path loss measurement. If the corresponding path loss measurement resource is configured for the SRS resource, it indicates that the SRS resource is not an SRS resource used for path loss measurement.

For example, for an uplink signal resource, configuration information of the uplink signal resource may be further used to configure a path loss measurement resource corresponding to the uplink signal resource, or the configuration information of the uplink signal resource may include a related parameter of the path loss measurement resource corresponding to the uplink signal resource. If the uplink path loss measurement resource corresponding to the uplink signal resource is not configured by using the configuration information of the uplink signal resource, the uplink path loss resource is the uplink path loss measurement resource. If the uplink path loss measurement resource corresponding to the uplink signal resource is configured by using the configuration information of the uplink signal resource, the uplink path loss resource is not the uplink path loss measurement resource. It may be understood that the uplink signal resource in the content of this paragraph may be replaced with an uplink signal.

In embodiments of this application, that the uplink signal resource corresponds to the path loss measurement resource may be understood as that a path loss value on which a transmit power of an uplink signal sent by using the uplink signal resource is based is measured based on a received power and a transmit power of a path loss measurement signal sent by using the path loss measurement resource corresponding to the uplink signal resource.

For example, the uplink signal resource includes at least one of the following resources: an SRS resource, a physical uplink control channel PUCCH resource, a physical uplink shared channel PUSCH resource, a demodulation reference signal DMRS resource, or a physical random access channel PRACH resource.

For example, RRC configuration information or a MAC-CE may indicate a path loss measurement resource corresponding to the PUCCH resource, the PUSCH resource, or the SRS resource.

For example, for the PUCCH resource, a corresponding path loss measurement resource may be configured for each PUCCH resource, or a corresponding path loss measurement resource may be configured for each PUCCH resource group.

For example, for the PUSCH resource, a corresponding path loss measurement resource may be configured for each PUSCH resource, or a corresponding path loss measurement resource may be configured for each PUSCH resource group.

For example, for the SRS resource, a corresponding path loss measurement resource may be configured for each SRS resource, or a corresponding SRS resource for path loss measurement may be configured for each SRS resource group (for example, an SRS resource set). Alternatively, the MAC-CE may indicate an SRS resource for path loss measurement that corresponds to a PUCCH, a PUSCH, or an SRS.

In some possible implementations, the path loss measurement resource may be configured in a TCI-state. The TCI-state is a parameter used for uplink transmission, and is used to determine a transmission beam used for uplink transmission.

If the path loss measurement resource is configured in the TCI-state, an uplink signal that uses the TCI-state corresponds to the path loss measurement resource, that is, the uplink signal may be transmitted by using a path loss value corresponding to the path loss measurement resource.

For example, the TCI-state may include a path loss measurement resource, and all uplink signals (for example, a PUCCH, a PUSCH, or an SRS) that use the TCI-state correspond to the path loss measurement resource.

For another example, the TCI-state may include a plurality of path loss measurement resources, and each path loss measurement resource corresponds to one type of uplink signal (for example, a PUCCH, a PUSCH, or an SRS). For example, the TCI-state may include three path loss measurement resources, which respectively correspond to the PUCCH, the PUSCH, and the SRS that use the TCI-state.

In this embodiment, it may be understood that, when the network device does not have a downlink communication function, the network device may send the configuration information to the terminal through a network device having the downlink communication function. For example, the network device may send the configuration information to the network device having the downlink communication function, and the network device having the downlink communication function forwards or transparently transmits the configuration information to the terminal.

S320. The terminal device sends the path loss measurement signal. Correspondingly, the network device receives the path loss measurement signal.

It may be understood that the terminal device needs to determine the transmit power of the path loss measurement signal, and send the path loss measurement signal based on the transmit power.

For example, the transmit power of the path loss measurement signal determined by the terminal device may be a preset transmit power. For ease of description, the transmit power may be referred to as a first transmit power.

The preset transmit power may be a value specified in a protocol. For example, the transmit power is a transmit power determined based on a power class (power class) used by the terminal device. For another example, the transmit power is equal to a largest transmit power allowed at a power class (power class) used by the terminal device. Alternatively, the preset transmit power may be a value indicated by the network device to the terminal device, for example, a value configured by using RRC configuration information.

For another example, the transmit power of the path loss measurement signal determined by the terminal device may be obtained through calculation based on the path loss value corresponding to the path loss measurement signal. Each path loss measurement signal may correspond to a path loss value, and the path loss value corresponding to the path loss measurement signal may be previously measured and calculated by the network device based on the path loss measurement signal sent by the terminal, and indicated to the terminal device. For example, the terminal device previously sends the path loss measurement signal to the network device, and the network device determines the path loss value corresponding to the path loss measurement signal, and indicates the path loss value to the terminal device.

In this example, after calculating and determining the transmit power of the path loss measurement signal, the terminal device may report the transmit power to the network device, so that the network device knows the transmit power used by the path loss measurement signal, and may further calculate the path loss value of the path loss measurement signal.

For example, the terminal device may report the transmit power of the path loss measurement signal by using UCI (uplink control information, uplink control information) or MAC-CE signaling.

For a path loss measurement signal, the terminal device may determine, based on a condition, a manner to be used to determine a transmit power of the path loss measurement signal. For example, when a first condition is met, the transmit power of the path loss measurement signal is determined by using a path loss value corresponding to the path loss measurement signal; or when the first condition is not met, the transmit power of the path loss measurement signal is a preset transmit power.

The first condition may be one or a combination of the following: The terminal device has determined the path loss value corresponding to the path loss measurement signal; initial path loss indication information has been received by the terminal device; the initial path loss indication information has taken effect; the terminal device has received path loss indication information indicating the path loss value corresponding to the path loss measurement signal; the terminal device has received, within a past period of time, the path loss indication information indicating the path loss value corresponding to the path loss measurement signal; or a timer corresponding to the path loss value of the path loss measurement signal has not expired. The initial path loss indication information is initial path loss indication information after an initial RRC configuration is completed.

The terminal device may maintain a timer. Each time the terminal receives the path loss value of the path loss measurement signal indicated by the network device, the terminal sets the timer to zero, that is, restarts timing. If the timer has expired, for example, the path loss value of the path loss measurement signal indicated by the network device is not received within a period of time, the path loss value corresponding to the path loss measurement resource is invalid, and cannot be used for uplink transmission, that is, cannot be used to calculate a transmit power of an uplink signal.

Optionally, the foregoing timer may be maintained for each path loss measurement signal, or the foregoing unified timer may be maintained for all path loss measurement signals.

S330. The network device calculates the path loss value of the path loss measurement signal.

For example, the path loss measurement signal is in one-to-one correspondence with the path loss measurement resource. Therefore, the path loss value of the path loss measurement signal may be referred to as the path loss value corresponding to the path loss measurement resource.

For example, after receiving the path loss measurement signal, the network device may obtain the path loss value of the path loss measurement signal by dividing the transmit power of the path loss measurement signal by the received power of the path loss measurement signal. The path loss value indicates how many times the received power of the path loss measurement signal is attenuated compared with the transmit power. In this example, the transmit power and the received power of the path loss measurement signal may be in milliwatts (mW).

For another example, the network device may subtract the received power of the path loss measurement signal from the transmit power of the path loss measurement signal, to obtain the path loss value of the path loss measurement signal. The path loss value may indicate authentication in dB of the received power of the path loss measurement signal compared with the transmit power. In this example, the transmit power and the received power of the path loss measurement signal may be in dBm.

For example, if the transmit power of the path loss measurement signal is 40 dBm, and the received power of the path loss measurement signal is -40 dBm, the path loss value is 40 - (-40) = 80 dBm.

S340. The network device sends path loss indication information to the terminal device. Correspondingly, the terminal device receives the path loss indication information.

For example, the path loss indication information indicates the path loss value of the path loss measurement signal sent by the terminal device in S330.

For example, the path loss indication information may indicate a path loss value of one or more path loss measurement signals. For example, when the terminal sends a plurality of path loss measurement signals in S320, the path loss indication information may indicate a path loss value of each of all or a part of the plurality of path loss measurement signals.

In some possible implementations, the path loss indication information may be carried in RRC signaling, MAC-CE signaling, or downlink control information (downlink control information, DCI) signaling.

In some possible implementations, the path loss indication information includes information corresponding to the one or more path loss measurement signals, for example, includes an index of each of the one or more path loss measurement signals and the path loss value of the path loss measurement signal. The index of the path loss measurement signal may be an index of a path loss measurement resource corresponding to the path loss measurement signal.

In some possible implementations, the path loss value corresponding to each path loss measurement signal may be an absolute value, or may be a relative value. The absolute value is a path loss value directly used by the terminal device. The relative value is a delta value of the path loss value.

For example, a previous path loss value of the path loss measurement signal is 80 dBm, and the network device finds that the path loss value of the path loss measurement signal changes to 85 dBm through measurement. In this case, the network device indicates the delta value of 5 dBm to the terminal device, and the terminal device updates the path loss value of the path loss measurement signal to 85 dBm based on the delta value. 5 dBm is a relative value.

In some possible implementations, a differential quantization manner may be used for path loss values of the plurality of path loss measurement signals. For example, one of the plurality of path loss measurement signals is used as a reference path loss measurement signal. For the reference path loss measurement signal, a path loss value of the reference path loss measurement signal is directly indicated to the network device as a reference path loss value. For each of other path loss measurement signals, the network device indicates a difference between a path loss value of each of the other path loss measurement signals and the path loss value of the reference path loss measurement signal.

For example, path loss values corresponding to two path loss measurement signals are respectively x dBm and y dBm, and x dBm, as the path loss value of the reference path loss measurement signal, is directly indicated. For the other path loss measurement signal, the network device indicates a difference between a path loss value of the other path loss measurement signal and the path loss value of the reference path loss measurement signal, that is, indicates (x-y) dBm or (y-x) dBm.

In some possible implementations, the reference path loss measurement signal may be a 1^{st} or last path loss measurement signal in the plurality of path loss measurement signals, or may be a path loss measurement signal corresponding to a 1^{st} or last path loss measurement resource in one or more path loss measurement resources, or may be a path loss measurement signal corresponding to a path loss measurement resource with a largest index or a smallest index.

According to the method in this embodiment, the terminal device may determine a path loss value of an uplink signal between a network device having only an uplink receiving function and the terminal device. An improvement of the method in this embodiment is that the terminal device sends the path loss measurement signal, the network device measures and indicates the path loss value of the path loss measurement signal, and the terminal device may determine the path loss value of the uplink signal between the network device having only the uplink receiving function and the terminal device.

In an example of this embodiment of this application, the configuration information in S310 may include a related parameter of one or more first resources, the first resource is an uplink path loss measurement resource, and each of the one or more first resources corresponds to one first signal. The first resource is a path loss measurement resource. Therefore, a first signal corresponding to the first resource may be referred to as an uplink path loss measurement signal.

For example, the first resource may be the SRS resource.

For example, the related parameter of the first resource includes a first parameter, and the first parameter indicates that the first resource is the uplink path loss measurement resource.

For example, the first parameter is a type parameter, the type parameter indicates a type of the first resource, and when the type indicated by the first parameter is a first type, it indicates that the first resource is the path loss measurement resource.

In S320, the terminal device sends a first signal corresponding to each of at least one of the one or more first resources in the configuration information.

For example, before the terminal sends the first signal corresponding to the one or more first resources, the terminal further determines a transmit power of the first signal.

For example, the transmit power of the first signal is a first transmit power configured by using the configuration information, or a transmit power determined based on the path loss corresponding to the first resource.

For example, when the first condition is met, the transmit power of the first signal is the first transmit power; or when the first condition is not met, the transmit power of the first signal is the transmit power determined based on the path loss value corresponding to the first resource.

In S330, the network device calculates a path loss value of the first signal corresponding to each of the at least one of the one or more first resources. For ease of description, the path loss value of the first signal corresponding to the first resource is referred to as the path loss value corresponding to the first resource for short.

It may be understood that the at least one first resource may be all or a part of the one or more first resources.

In S340, the path loss indication information indicates a path loss value corresponding to each of the at least one first resource. The path loss indication information may be referred to as first indication information.

For example, the first indication information includes an index of each of the at least one first resource and path loss information corresponding to the first resource.

For example, for a first resource with a largest path loss value or a smallest path loss value in the at least one first resource, the first indication information includes a path loss value of the first resource; and for any other first resource in the at least one first resource, the first indication information includes a difference between a path loss value of the any other first resource and the path loss value of the first resource.

FIG. 4 is a schematic flowchart of a communication method according to another embodiment of this application. As shown in FIG. 4, the communication method may include S410 to S440.

S410. A network device sends configuration information to a terminal device. Correspondingly, the terminal device receives the configuration information from the network device.

For this step, refer to S310. Details are not described herein again.

S420. The terminal device sends a path loss measurement signal. Correspondingly, the network device receives the path loss measurement signal.

For this step, refer to S320. Details are not described herein again. A difference may include: When the terminal device determines a transmit power of the path loss measurement signal, the path loss value corresponding to the path loss measurement signal in related content "obtained through calculation based on the path loss value corresponding to the path loss measurement signal" may be replaced with a received power corresponding to the path loss measurement signal.

S430. The network device sends received power indication information to the terminal device. Correspondingly, the terminal device receives the received power indication information. The received power indication information indicates the received power at which the network device receives the path loss measurement signal sent by the terminal device.

For example, the received power indication information may indicate a received power of one or more path loss measurement signals. For example, when the terminal sends a plurality of path loss measurement signals in S420, the received power indication information may indicate a received power of each of all or a part of the plurality of path loss measurement signals.

In some possible implementations, the received power indication information may be carried in RRC signaling, MAC-CE signaling, or DCI signaling.

In some possible implementations, the received power indication information includes information corresponding to the one or more path loss measurement signals, for example, includes an index of each of the one or more path loss measurement signals and the received power of the path loss measurement signal. The index of the path loss measurement signal may be an index of a path loss measurement resource corresponding to the path loss measurement signal.

In some possible implementations, the received power corresponding to each path loss measurement signal may be an absolute value, or may be a relative value. The absolute value is a value directly used by the network device. The relative value is a delta value of the received power.

For example, a previous received power of the path loss measurement signal is 80 dBm, and the network device finds that the received power of the path loss measurement signal changes to 85 dBm. In this case, the network device indicates the delta value of 5 dBm to the terminal device, and the terminal device updates the received power of the path loss measurement signal to 85 dBm based on the delta value. 5 dBm is a relative value.

In some possible implementations, a differential quantization manner may be used for received powers of the plurality of path loss measurement signals. For example, one of the plurality of path loss measurement signals is used as a reference path loss measurement signal. For the reference path loss measurement signal, a received power of the reference path loss measurement signal is directly indicated to the network device as a reference received power. For each of other path loss measurement signals, the network device indicates a difference between a received power of each of the other path loss measurement signals and the received power of the reference path loss measurement signal.

For example, received powers corresponding to two path loss measurement signals are respectively x dBm and y dBm, and x dBm, as the received power of the reference path loss measurement signal, is directly indicated. For the other path loss measurement signal, the network device indicates a difference between a received power of the other path loss measurement signal and the received power of the reference path loss measurement signal, that is, indicates (x-y) dBm or (y-x) dBm.

In some possible implementations, the reference path loss measurement signal may be a 1^{st} or last path loss measurement signal in the plurality of path loss measurement signals, or may be a path loss measurement signal corresponding to a 1^{st} or last path loss measurement resource in one or more path loss measurement resources, or may be a path loss measurement signal corresponding to a path loss measurement resource with a largest index or a smallest index.

S440. The terminal device calculates the path loss value of the path loss measurement signal.

For this step, refer to related content about the network device calculating the path loss value of the path loss measurement signal in S330. Details are not described herein again.

According to the method in this embodiment, the terminal device may determine a path loss value between a network device having only an uplink receiving function and the terminal device. An improvement of this embodiment is that the terminal device sends the path loss measurement signal, the network device measures and indicates the received power of the path loss measurement signal, and the terminal device may determine, based on the received power, the path loss value between the network device having only the uplink receiving function and the terminal device.

In an example of this embodiment of this application, the configuration information in S410 includes a related parameter of one or more first resources, the first resource is an uplink path loss measurement resource, and when each of the one or more first resources corresponds to one first signal, the received power indication information in S340 indicates a received power corresponding to each of the at least one first resource. The received power indication information may also be referred to as first indication information.

For example, the first indication information includes an index of each of the at least one first resource and received-power information corresponding to the first resource.

For example, for a first resource with a largest received power or a smallest received power in the at least one first resource, the first indication information includes a received power of the first resource; and for any other first resource in the at least one first resource, the first indication information includes a difference between a received power of the any other first resource and the received power of the first resource.

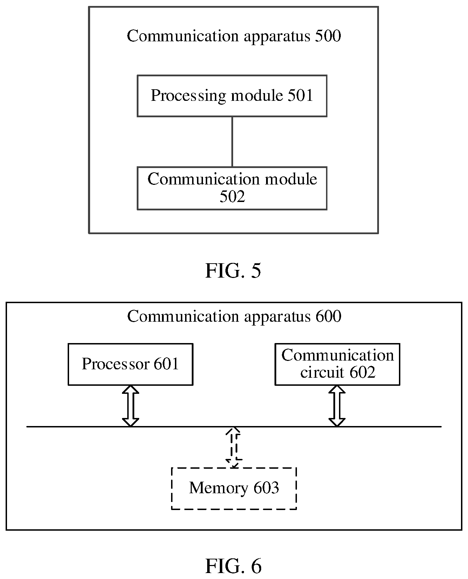

FIG. 5 is a diagram of a structure of a communication apparatus according to an embodiment of this application. As shown in FIG. 5, the apparatus 500 may include a processing module 501 and a communication module 502.

In a first example, the apparatus 500 may be configured to implement the communication method implemented by the terminal device in any one of embodiments shown in FIG. 3 to FIG. 4. For example, the processing module 501 is configured to implement processing-related steps performed by the terminal device in any one of embodiments shown in FIG. 3 to FIG. 4, and the communication module 502 is configured to implement steps such as sending and/or receiving performed by the terminal device in any one of embodiments shown in FIG. 3 to FIG. 4.

In a second example, the apparatus 500 may be configured to implement the communication method implemented by the network device in any one of embodiments shown in FIG. 3 to FIG. 4. For example, the processing module 501 is configured to implement processing-related steps performed by the network device in any one of embodiments shown in FIG. 3 to FIG. 4, and the communication module 502 is configured to implement steps such as sending and/or receiving performed by the network device in any one of embodiments shown in FIG. 3 to FIG. 4.

FIG. 6 is a diagram of a structure of a communication apparatus according to another embodiment of this application. As shown in FIG. 6, the apparatus 600 includes a processor 601 and a communication circuit 602. The processor 601 and the communication circuit 602 are coupled to each other. It may be understood that the communication circuit 602 may be a transceiver or an input/output interface. Optionally, the apparatus 600 may further include a memory 603, configured to store instructions executed by the processor 601, or store input data required by the processor 601 to run the instructions, or store data generated after the processor 601 runs the instructions. It may be understood that the memory 603 may be located outside the processor 601, or may be located inside the processor 601.

For example, the processor 601 is configured to implement a function of the processing module 501, and the communication circuit 602 is configured to implement a function of the communication module 502.

The apparatus 600 may be a communication device, or may be a chip used in the communication device. For example, the apparatus 600 may be UE or a chip applied to the UE, or may be a network device or a chip applied to the network device. It may be understood that when the apparatus 600 is the UE or the network device, the communication circuit 602 may be a transceiver.

Some embodiments of this application further provide a computer program product. When the computer program product runs on a processor, the method implemented by the terminal device in any one of the foregoing embodiments may be implemented, or the method implemented by the network device in any one of the foregoing method embodiments may be implemented.

Some embodiments of this application further provide a computer-readable storage medium. The computer-readable storage medium includes computer instructions. When the computer instructions are run on a processor, the method implemented by the terminal device in any one of the foregoing embodiments may be implemented, or the method implemented by the network device in any one of the foregoing method embodiments may be implemented.

In some embodiments of this application, a communication system is further provided. The system may implement the method implemented by the terminal device and the network device in any one of the foregoing embodiments.

It may be understood that the processor in embodiments of this application may be the following device or all or a part of circuits configured for a function of processing in the following device: a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in the network device or the terminal device.

All or a part of the foregoing embodiments may be implemented by software, hardware, firmware, or any combination thereof. When software is used to implement the foregoing embodiments, all or a part of the foregoing embodiments may be implemented in a form of a computer program product. The computer program product includes one or more computer programs or instructions. When the computer programs or the instructions are loaded and executed on a computer, all or a part of the procedures or functions in embodiments of this application are executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disk; or may be a semiconductor medium, for example, a solid-state drive.

In various embodiments of this application, unless otherwise stated or there is a logic conflict, terms and/or descriptions in different embodiments are consistent and may be mutually referenced, and technical features in different embodiments may be combined to form a new embodiment based on internal logical relationships of different embodiments.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a terminal device, wherein the method comprises:
receiving configuration information, wherein the configuration information comprises a related parameter of one or more first resources, the first resource is an uplink path loss measurement resource, and each of the one or more first resources corresponds to one first signal;
sending a first signal corresponding to the one or more first resources; and
receiving first indication information, wherein the first indication information indicates a path loss value or a received power corresponding to at least one first resource.

2. The method according to claim 1, wherein the first resource is a sounding reference signal SRS resource.

3. The method according to claim 1 or 2, wherein the related parameter of the first resource comprises a first parameter, and the first parameter indicates that the first resource is the uplink path loss measurement resource.

4. The method according to claim 3, wherein the first parameter is a type parameter, the type parameter indicates a type of the first resource, and when the type indicated by the first parameter is a first type, it indicates that the first resource is the uplink path loss measurement resource.

5. The method according to claim 1, wherein the configuration information is used to configure an uplink path loss measurement resource associated with an uplink signal resource, and the uplink signal resource comprises at least one of the following resources: an SRS resource, a physical uplink control channel PUCCH resource, a physical uplink shared channel PUSCH resource, a demodulation reference signal DMRS resource, or a physical random access channel PRACH resource.

6. The method according to claim 5, wherein the uplink signal resource comprises the SRS resource, and if an uplink path loss measurement resource associated with the SRS resource is not configured by using the configuration information, the SRS resource is the uplink path loss measurement resource.

7. The method according to claim 1, wherein before the sending the first signal corresponding to the one or more first resources, the method further comprises:
determining a transmit power of the first signal.

8. The method according to claim 7, wherein the transmit power of the first signal is a first transmit power configured by using the configuration information, or a transmit power determined based on the path loss corresponding to the first resource.

9. The method according to claim 8, wherein when a first condition is met, the transmit power of the first signal is the first transmit power; or when the first condition is not met, the transmit power of the first signal is the transmit power determined based on the path loss value corresponding to the first resource; and
the first condition comprises one or more of the following conditions:
initial first indication information has been received by the terminal device;
the initial first indication information has taken effect;
the terminal device knows the path loss value corresponding to the first resource;
the terminal device has received, within a past period of time, indication information comprising the path loss value corresponding to the first resource; or
a timer that corresponds to the first resource has not expired, wherein the timer is a timer configured to maintain the path loss value corresponding to the first resource.

10. The method according to claim 1, wherein the first indication information comprises an index of each of the at least one first resource and path loss information corresponding to the first resource.

11. The method according to claim 10, wherein for a first resource with a largest path loss value or a smallest path loss value in the at least one first resource, the first indication information comprises a path loss value of the first resource; and
for any other first resource in the at least one first resource, the first indication information comprises a difference between a path loss value of the any other first resource and the path loss value of the first resource.

12. The method according to claim 1, wherein the first indication information comprises an index of each of the at least one first resource and a received power corresponding to the first resource; and
based on the received power of the at least one first resource, the path loss value corresponding to the at least one first resource is calculated.

13. The method according to claim 12, wherein for a first resource with a largest received power or a smallest received power in the at least one first resource, the first indication information comprises a received power of the first resource; and
for any other first resource in the at least one first resource, the first indication information comprises a difference between a received power of the any other first resource and the received power of the first resource.

14. A communication method, applied to a network device, wherein the method comprises:
sending configuration information, wherein the configuration information comprises a related parameter of one or more first resources, the first resource is an uplink path loss measurement resource, and each of the one or more first resources corresponds to one first signal;
receiving a first signal corresponding to the one or more first resources; and
sending first indication information, wherein the first indication information indicates a path loss value or a received power corresponding to at least one first resource.

15. The method according to claim 14, wherein the first resource is a sounding reference signal SRS resource.

16. The method according to claim 14 or 15, wherein the related parameter of the first resource comprises a first parameter, and the first parameter indicates that the first resource is the uplink path loss measurement resource.

17. The method according to claim 16, wherein the first parameter is a type parameter, the type parameter indicates a type of the first resource, and when the type indicated by the first parameter is a first type, it indicates that the first resource is the uplink path loss measurement resource.

18. The method according to claim 14, wherein the configuration information is used to configure an uplink path loss measurement resource associated with an uplink signal resource, and the uplink signal resource comprises at least one of the following resources: an SRS resource, a physical uplink control channel PUCCH resource, a physical uplink shared channel PUSCH resource, a demodulation reference signal DMRS resource, or a physical random access channel PRACH resource.

19. The method according to claim 18, wherein the uplink signal resource comprises the SRS resource, and if an uplink path loss measurement resource associated with the SRS resource is not configured by using the configuration information, the SRS resource is the uplink path loss measurement resource.

20. The method according to claim 14, wherein before the sending the first indication information, the method further comprises:
determining a transmit power of the first signal.

21. The method according to claim 20, wherein the transmit power of the first signal is a first transmit power configured by using the configuration information, or a transmit power determined based on the path loss corresponding to the first resource.

22. The method according to claim 21, wherein when a first condition is met, the transmit power of the first signal is the first transmit power; or when the first condition is not met, the transmit power of the first signal is the transmit power determined based on the path loss value corresponding to the first resource; and
the first condition comprises one or more of the following conditions:
initial first indication information has been received by the terminal device;
the initial first indication information has taken effect;
the terminal device knows the path loss value corresponding to the first resource;
the terminal device has received, within a past period of time, indication information comprising the path loss value corresponding to the first resource; or
a timer that corresponds to the first resource has not expired, wherein the timer is a timer configured to maintain the path loss value corresponding to the first resource.

23. The method according to claim 14, wherein the first indication information comprises an index of each of the at least one first resource and path loss information corresponding to the first resource.

24. The method according to claim 23, wherein for a first resource with a largest path loss value or a smallest path loss value in the at least one first resource, the first indication information comprises a path loss value of the first resource; and
for any other first resource in the at least one first resource, the first indication information comprises a difference between a path loss value of the any other first resource and the path loss value of the first resource.

25. The method according to claim 14, wherein the first indication information comprises an index of each of the at least one first resource and a received power corresponding to the first resource.

26. The method according to claim 25, wherein for a first resource with a largest received power or a smallest received power in the at least one first resource, the first indication information comprises a received power of the first resource; and
for any other first resource in the at least one first resource, the first indication information comprises a difference between a received power of the any other first resource and the received power of the first resource.

27. A communication apparatus, comprising a functional module configured to implement the method according to any one of claims 1 to 26.

28. A communication apparatus, comprising a memory and a processor, wherein the memory is configured to store program instructions, and the processor is configured to execute the program instructions in the memory, to implement the method according to any one of claims 1 to 26.

29. A communication system, wherein the communication system comprises a terminal device and a network device, the terminal device is configured to implement the method according to any one of claims 1 to 13, and the terminal device is configured to implement the method according to any one of claims 14 to 26.

30. A computer-readable storage medium, wherein the computer-readable storage medium stores program code to be executed by a computer, and the program code comprises instructions used to implement the method according to any one of claims 1 to 26.
